Europäisches Patentamt

(19) European Patent Office  (11) Veröffentlichungsnummer: **0 051 626**
**B1**
Office européen des brevets

(12) **EUROPÄISCHE PATENTSCHRIFT**

(45) Veröffentlichungstag der Patentschrift:
21.08.85

(21) Anmeldenummer: 81901220.4

(22) Anmeldetag: 15.05.81

(86) Internationale Anmeldenummer:
**PCT/DE 81/00072**

(87) Internationale Veröffentlichungsnummer:
**WO 81/03259 (26.11.81 Gazette 81/28)**

(51) Int. Cl.⁴: **A 22 C 11/06**

(54) **ANORDNUNG ZUM AUFEINANDERFOLGENDEN PORTIONIEREN EINER ABTEILBAREN MASSE, INSBESONDERE WURSTMASSE.**

(30) Priorität: 16.05.80 DE 3018793

(43) Veröffentlichungstag der Anmeldung:
19.05.82 Patentblatt 82/20

(45) Bekanntmachung des Hinweises auf die Patenterteilung:
21.08.85 Patentblatt 85/34

(84) Benannte Vertragsstaaten:
FR GB

(56) Entgegenhaltungen:
EP - A - 0 013 552
EP - A - 0 019 711
DE - A - 2 249 070
DE - B - 1 180 151
DE - C - 1 432 504
FR - A - 2 197 160
GB - A - 755 210
GB - A - 1 125 320
US - A - 3 207 368

(73) Patentinhaber: **ALBERT HANDTMANN GMBH & CO.,**
**Birkenallee 25-29, D-7950 Biberach 1 (DE)**

(72) Erfinder: **MÜLLER, Johann, Rammingerstrasse 2,**
**D-7950 Biberach (DE)**
Erfinder: **STAUDENRAUSCH, Georg, Rosenstrasse 14,**
**D-7951 Rissegg (DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath, Maximilianstrasse 58,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Anordnung zum aufeinanderfolgenden Portionieren einer abteilbaren Masse, insbesondere Wurstmasse, mit einer im Rhythmus des Dosiervorganges zu betätigenden Fördereinrichtung für die Masse, der ein motorisch betätigtes Abtrennorgan nachgeschaltet ist, dessen Steuerorgan in Abhängigkeit von einem Füllmengen-Sollwert auch die Fördereinrichtung betätigt und hydraulisch mit einem in einem Zylinder zwischen zwei Endanschlägen verschiebbaren Stellkolben zur Betätigung des Trennorgans verbunden ist.

Bei einer derartigen, aus der DE-A-1 432 504 bekannten Anordnung ist einem Füllkolben der Fördereinrichtung ein Dosier- und Absperrkolben als Abtrennorgan nachgeschaltet, der zum Öffnen und Schließen der Verbindungsöffnung zwischen dem Füllkolben und dem Dosier- und Absperrkolben drehbar ist, während er zum Ausschieben einer Portion durch eine Austrittsöffnung hindurch angehoben wird. Zum Verdrehen des Dosier- und Absperrkolbens dient der Stellkolben, der in der Öffnungsphase verschoben wird, wobei das verdrängte Strömungsmittel über die Ausgangsöffnung ungenutzt in den Sumpf abfließt. Nach Freigabe einer anderen Öffnung im Zylindergehäuse fließt das Strömungsmittel durch eine Eingangsöffnung zum Füllkolben und hebt diesen an, so daß die Masse durch die Verbindungsöffnung in einen Dosierzylinder des Abtrennorgans gedrückt wird. Im Dosierzylinder schiebt die einfließende Masse den Dosier- und Absperrkolben nach unten, bis dessen Kolbenstange über einen in einem Zylinder vertikal beweglichen Anschlag einen Schalter betätigt, der das Steuerorgan für den Stellkolben umschaltet. Dadurch wird der Strömungsweg zur anderen Stirnseite des Stellkolbens umgeleitet, welcher seinerseits den Dosier- und Absperrkolben so verdreht, daß die Verbindungsöffnung geschlossen und die Austrittsöffnung geöffnet wird, durch die die Masse beim Aufwärtshub des Dosier- und Absperrkolbens in eine Stopftülle geschoben wird. Wenn der Dosier- und Absperrkolben seine obere Stellung wieder erreicht hat, betätigt ein Endschalter eine nicht näher bezeichnete Abdrehvorrichtung, die nicht in den Hydraulikkreis der Anordnung geschaltet ist, sondern einen gesonderten Antrieb benötigt.

Bei dieser bekannten Anordnung wird die vorhandene Strömungsmittelenergie nur zum Teil ausgenutzt, da einerseits bei der Öffnungsbewegung für den Dosier- und Absperrkolben das vom Stellkolben verdrängte Strömungsmittel ungenutzt in den Sumpf zurückfließt und andererseits eine zusätzliche Energiequelle für die Abdrehvorrichtung erforderlich ist. Hinzu kommt, daß die Abdrehphase in der verhältnismäßig langen Pause erfolgt, in der die Austrittsöffnung geschlossen ist und der Dosierzylinder erneut gefüllt wird, was nicht nur erhebliche Totzeiten, sondern auch eine große erforderliche Leistung zur Folge hat.

Ausgehend von diesem Stand der Technik liegt der Erfindung die Aufgabe zugrunde, die Anordnung der eingangs erwähnten Art so zu verbessern, daß die Strömungsmittelenergie optimal ausgenutzt wird.

Dies wird dadurch erreicht, daß der Stellkolben bei der Öffnungsbewegung des Zylindergehäuses in eine zur Fördereinrichtung führende Leitung verdrängt, und am Ende der Schließbewegung den Weg des vollen Strömungsmittelstroms durch die Bahn des Stellkolbens hindurch zur Betätigung einer nachgeschalteten Abdrehvorrichtung frei gibt.

Diese Lösung hat den erheblichen Vorteil, daß schon bei der Verschiebung des Stellkolbens zum Öffnen des Abtrennorgans das vom Stellkolben verdrängte Strömungsmittel ausgenutzt wird, um die Fördereinrichtung zu betätigen, welche dadurch einen Portioniervorgang einleitet und die Masse durch das Abtrennorgan hindurchschiebt. Die zur Verfügung stehende Energie wird dadurch voll in Nutzarbeit umgesetzt. Die maximal mögliche Portioniergeschwindigkeit ist sehr hoch. Nach Erreichen eines vorgegebenen Sollwertes für die Portionsgröße gibt der Stellkolben in seiner Schließendstellung den Strömungsmittelweg frei zur Abdrehvorrichtung, so daß zu deren Antrieb eine zusätzliche Energiequelle nicht erforderlich ist.

Diese erfindungsgemäße hydraulische Schaltung hat außerdem den Vorteil, daß das Abdrehen in einer völlig unabhängigen Pause erfolgen kann, die zwischen zwei Portioniervorgängen liegt.

Es ist zwar aus der FR-A-2 197 160 eine Anordnung bekannt, die sich jedoch in beträchtlichem Maße von der erfindungsgemäßen Anordnung unterscheidet. Es ist nämlich kein in einem Zylinder zwischen zwei Endanschlägen verschiebbarer Stellkolben vorhanden, der das Abtrennorgan betätigt, sondern dieses wird durch eine Taumelscheibe geöffnet und geschlossen. In dem als Zylinder ausgebildeten Abtrennorgan ist ein Dosierkolben vertikal beweglich, welcher beim Abwärtshub eine Portion ansaugt und diese beim Aufwärtshub abgibt. Ein Rotationsverteiler für das Strömungsmittel schließt abwechselnd einen Motor für den Drehantrieb der Taumelscheibe und einen Motor für eine Abdrehvorrichtung an eine Druckquelle. Diese Steuerung ist wesentlich aufwendiger als die erfindungsgemäß vorgesehene, bei der der Stellkolben zur Betätigung des Abtrennorgans gleichzeitig als Steuerschieber für den Strömungsmittelstrom ausgebildet ist. Hierzu gibt die FR-A-2 197 160 keinerlei Anregung.

Weitere bevorzugte Merkmale und Vorteile der Erfindung ergeben sich aus der folgenden Beschreibung von Ausführungsbeispielen, die schematisch in der Zeichnung dargestellt sind. Es zeigt

Fig. 1 ein Schaltbild einer erfindungsgemäßen Anordnung mit einer hydraulisch betätigten Fördereinrichtung,

Fig. 2 auszugsweise ein zugehöriges Schaltbild mit zwei von einem gemeinsamen Impulsgeber gesteuerten Zählern und einer Vergleichsanordnung,

Fig. 3 auszugsweise ein weiteres Schaltbild
mit Zähler und Vergleichsanordnung zur Steuerung der Öffnungsweite des Abtrennorgans,

Fig. 4 eine vereinfachte Anordnung mit Flügelzellenpumpe als Fördereinrichtung und von dieser mechanisch getriebenem Impulsgeber und

Fig. 5 eine weitere Vereinfachung durch ausschließliche Steuerung des Abtrennorgans.

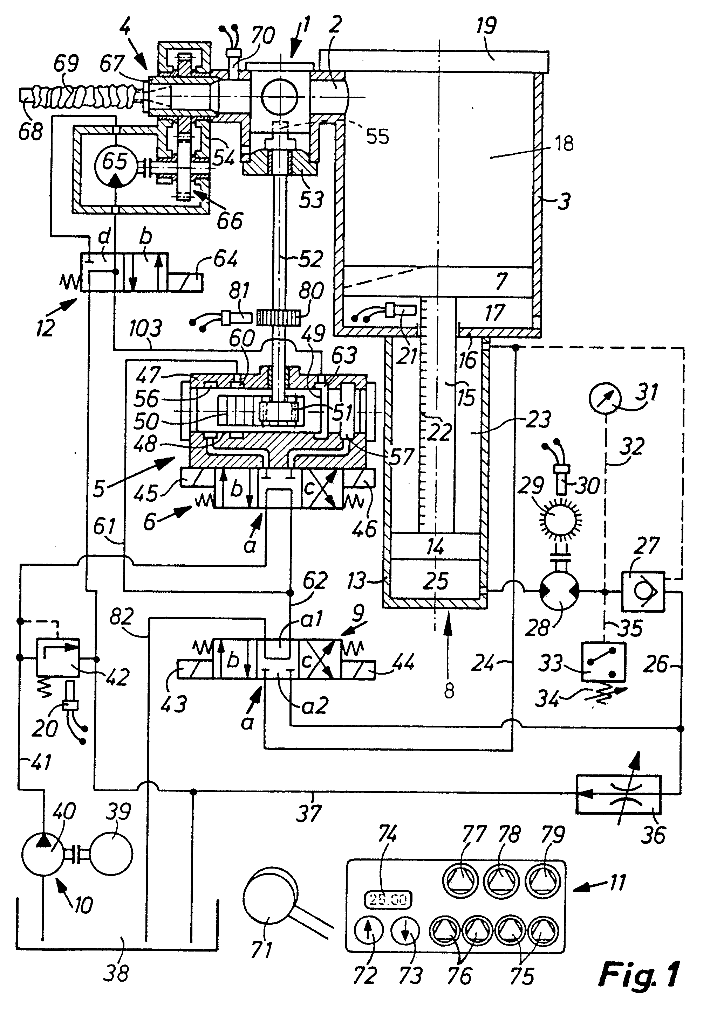

Bei der Anordnung nach Fig. 1 ist ein als Drehschieber ausgebildetes Abtrennorgan 1 in einer
Auslaßleitung 2 angebracht, die sich zwischen
einem Füllzylinder 3 und einer Abdrehvorrichtung 4 erstreckt. Zur Betätigungs des Abtrennorgans 1 dient ein Stellmotor 5 mit Steuerventil 6,
zur Betätigung eines im Füllzylinder 3 angeordneten Füllkolbens 7 ein Antriebsmotor 8 mit
Steuerventil 9, die von einem hydraulischen System, einer Fülldruckquelle 10, gespeist und
durch ein zentrales Steuergerät 11 gesteuert
werden. Zur Steuerung der Abdrehvorrichtung
dient ein weiteres Steuerventil 12.

Der Antriebsmotor 8 umfaßt einen Hydraulikzylinder 13 mit Antriebskolben 14, der mittels einer Kolbenstange 15 mit dem Füllkolben 7 verbunden ist. Der zwischen Füllkolben 7 und Zylinderboden 16 liegende Raum 17 ist mit der Außenluft in Verbindung. Der obenliegende Füllraum 18 ist durch einen Deckel 19 abgeschlossen, der zum Einfüllen neuer Füllmasse aufgeschwenkt werden kann.

Im Raum 17 läßt sich beispielsweise in Taster
21 anbringen, der eine an der Kolbenstange 15
angebrachte Skala 22 abtastet. Dabei kann es
sich um einen sog. »Induktosyn-Maßstab« handeln, der magnetische oder andere Felder aussendet und sich mit großer Genauigkeit abtasten
läßt.

Der über dem Antriebskolben 14 liegende
Raum 23 des Hydraulikzylinders 13 ist durch eine
Leitung 24 unmittelbar an das Steuerventil 9 angeschlossen, während an die vom unteren Raum
25 zum Steuerventil 9 führende Leitung 26 verschiedene Geräte angeschlossen sind. Eingeschaltet sind zunächst ein Rückschlagventil 27
und ein Durchlaufmesser 28, der einen Impulsgeber 29 antreibt, welcher wiederum von einem
Impulstaster 30 abgetastet wird. Der Impulsgeber 29 wird durch ein Sternrad gebildet, dessen
Zähne beim Entlanglaufen am Impulstaster 30 jeweils einen Impuls erzeugen. Die Einheit 28, 29
ist so geeicht, daß jeder Zahn und jeder Impuls
1 ml der vom größeren Füllkolben 7 in die Auslaßleitung 2 verdrängten Füllmasse entspricht.
Bei einem Verhältnis 5 : 1 der Flächen beider Kolben entspricht somit jeder Impuls 0,2 ml Hydrauliköl, das in den Raum 25 eintritt bzw. durch die
Leitung 26 fließt.

Wie durch die unterbrochenen Linien angedeutet, muß das Manometer 31 nicht unbedingt durch eine Leitung 32 an die Leitung 26 angeschlossen werden, sondern kann auch durch einen anders angebrachten Drucktaster gesteuert
werden. Dies gilt auch für den Druckregler 33 mit
einem federbelasteten Einsteller 34, der seinen
Druck-Tastwert zwar über die Leitung 35, im Prinzip aber auch durch jeden anderen in geeigneter
Weise angeordneten und ausgebildeten Taster
z. B. auf elektrischem Wege beziehen kann.

An die Leitung 26 ist über einen Mengenregler
36 eine Rücklaufleitung 37 angeschlossen, die
auch mit dem Steuerschieber 12 in Verbindung
und zur Ölwanne 38 geführt ist. Aus dieser fördert eine durch einen Motor 39 angetriebene
Pumpe 40 in die Druckleitung 41. Zwischen dieser Druckleitung und der Rücklaufleitung 37 ist
ein Überdruckventil 42 eingeschaltet, das mit einem Stellungstaster 20 kombiniert ist, der die
Anlage z. B. bei Erreichen der Endlagen des Kolbens 14 stillsetzen kann.

Beide Steuerventile 6 und 9 haben jeweils einen mittleren Halteteil a, einen linken Durchleitteil b und einen rechten Umkehrteil c. Sie werden gegen die Kraft von Rückstellfedern durch
Magnete 43, 44 bzw. 45, 46 gesteuert. Von den
vier Anschlüssen eines jeden Halteteiles wird auf
der einen Seite kurzgeschlossen, auf der anderen Seite abgesperrt.

Der Stellmotor 5 für das Absperrorgan 1 besteht im wesentlichen aus einem Zylindergehäuse 47 mit einer Bohrung 48 für einen in dieser
längsverschiebbaren Stellkolben 49. Dessen
Verzahnung 50 greift in ein Ritzel 51 einer Welle
52, die durch den Deckel 53 des Gehäuses 54 für
das Absperrorgan 1 hindurchgeführt und mit diesem durch eine lösbare Kupplung 55 verbunden
ist.

In der an beiden Enden durch Deckel verschlossenen Bohrung 48 des Zylindergehäuses
sind symmetrisch zu einer gemeinsamen Mittelebene zwei äußere und zwei innere Ringnuten
angebracht. Die beiden äußeren Ringnuten 56,
57 sind durch Z-förmige Kanäle mit den in der
Zeichnung untenliegenden Anschlüssen verbunden. Während die linke innere Ringnut 60 durch
eine Leitung 61 an eine Leitung 62 zwischen den
beiden Steuerventilen 6 und 9 angeschlossen ist,
führt eine Leitung 103 von der rechten inneren
Ringnut 63 zum Steuerventil 12 für die Abdrehvorrichtung 4. Dieses Steuerventil wird nur durch
einen Magneten 64 betätigt und hat neben einem
Durchleitteil b einen Austeil d, der in der gezeichneten Aus-Stellung den Strömungskreis
durch den Abdrehmotor 65 unterbricht.

Der Abdrehmotor treibt über ein Getriebe 66 in
bekannter Weise eine Abdrehhülse 67, die sich
zentrisch an die Auslaßleitung 2 anschließt und
auswechselbar ein Füllrohr 68 trägt, von dem
beim Abdrehvorgang die Wursthülle 69 abgezogen wird. Die Abdrehvorrichtung ist als Baueinheit nach Belieben abnehmbar oder ansetzbar.

Der Taster 70 ist unmittelbar in der Auslaßleitung 2 eingesetzt. Dabei kann es sich um einen
Drucktaster handeln, der den Druck unmittelbar
am Absperrorgan 1 abtastet und ggf. das Druckregelventil 33 auf elektrischem Wege beeinflußt. Der Taster 70 kann aber auch ein Durchlauf-Mengenmesser sein, der die Menge der durch die Auslaßleitung 2 strömenden Füllmasse in analoger Weise wie der Durchlaufmengenmesser 28 ertastet. Dieser Taster kann zudem so beschaffen sein, daß er die Menge unmittelbar als Summe von Mengenimpulsen der Füllmasse aufnimmt, daß also kein Impulsgeber 29 notwendig ist.

Beim Steuergerät 11 ist mit 71 der übliche Knieschalter bezeichnet, der Beginn und Ende der verschiedenen Füllvorgänge steuert. Die Drucktaste 72 steuert die Aufwärtsbewegung, die Drucktaste 73 die Abwärtsbewegung des Füllkolbens 7 beim Nachfüllen. 74 ist eine Füllstandsanzeige, die je nach Steueranschluß die Menge der im Füllzylinder 3 noch enthaltenen oder aus einer Charge bereits abgefüllten Füllmasse anzeigt.

75 ist ein Mengenwähler mit Drehknöpfen 76 für jede Dekade des vorgesehenen Portionsvolumens. Dort sind Einstellungen von weniger als 10 bis 9999 ml möglich.

Mit dem wiederum als Drehknopf ausgebildeten Funktionswähler 77 lassen sich die Funktionen F = Füllen, P = Portionieren und A = Portionieren + Abdrehen einstellen. Die Stellung des Abdrehwählers 78 bestimmt die Anzahl der bei jedem Abdrehvorgang auszuführenden Umdrehungen. Die elektrischen Mittel zum Abschalten des Abdrehmotors sind hier der Übersichtlichkeit wegen weggelassen.

Mit dem Öffnungswähler 79 läßt sich schließlich die Öffnungsweite des Absperrorgans 1 einstellen. Diese Öffnungsweite bzw. der Öffnungswinkel ist bestimmt durch die Dreheinstellung des fest auf der Welle 52 angebrachten Sternrades 80, das einen Impulsgeber bildet, dessen Impulse von einem Taster 81 aufgenommen und in der später noch zu beschreibenden Weise zur Steuerung herangezogen werden.

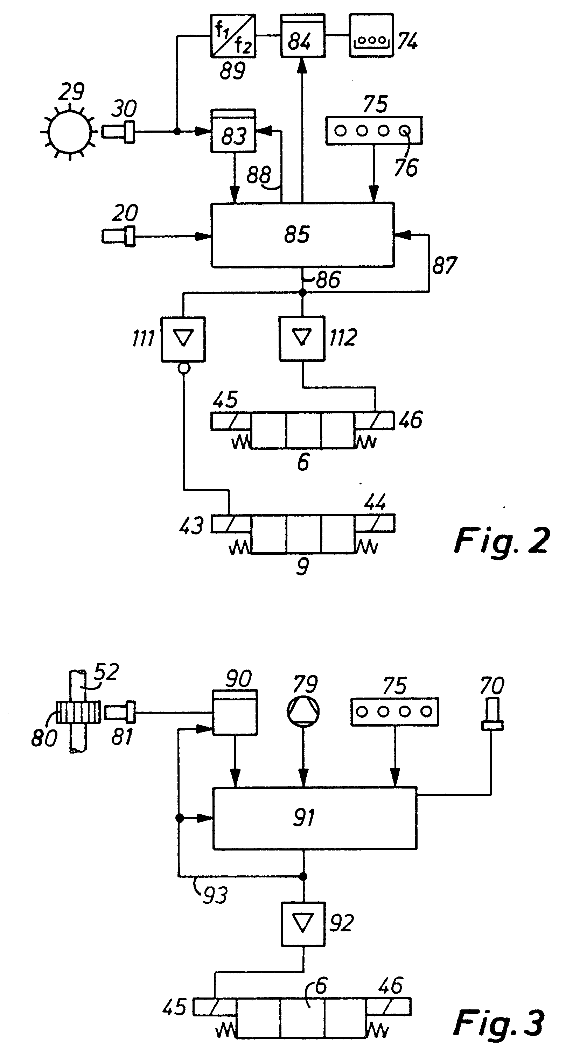

Bevor auf die Besonderheiten aus den Fig. 2 und 3 eingegangen wird, soll zunächst an Hand von Fig. 1 der Ablauf eines Dosiervorganges erläutert werden:

Nach Fig. 1 nehmen alle drei Steuerschieber die Haltstellung bzw. die Ausstellung ein, der Motor 39 der Pumpe 40 ist abgeschaltet. Der Stellkolben 49 steht in der linken Endstellung und hat das Absperrorgan 1 geschlossen. Der Füllkolben 7 nimmt seine untere Endstellung ein. Er ist gefüllt, und sein Deckel 19 ist verschlossen und verriegelt.

Durch Einschalten eines nicht gezeigten Hauptschalters wird nun der Motor 39 in Gang gesetzt und treibt die Pumpe 40 an, die in die Druckleitung 41 fördert. Von dieser strömt die Druckflüssigkeit ohne Arbeit zu leisten durch die Kurzschlußleitung der Steuerventile 6 und 9 und die Leitung 82 zur Wanne 38 zurück.

Es kann jetzt am Mengenwähler 75 die Portionsmenge, am Abdrehwähler 78 die Anzahl der zwischen zwei Portionen auszuführenden Umdrehungen des Füllrohres 68 und am Öffnungswähler 79 in noch später zu erläuternder Weise der Öffnungswinkel des Absperrorgans 1 eingestellt werden. Der Funktionswähler 77 wird auf A = Portionieren + Abdrehen gestellt.

Wenn jetzt der Knieschalter 71 gedrückt wird, so werden die Mangete 43 und 45 und damit die Durchlaufteile der Steuerventile 9 und 6 eingeschaltet. Dadurch strömt jetzt Druckflüssigkeit aus der Druckleitung 41 durch die linke äußere Ringnut 56 und verschiebt den Stellkolben 49 nach rechts, wodurch das Absperrorgan 1 geöffnet wird. Gleichzeitig strömt die vom Stellkolben verdrängte Druckflüssigkeit aus dem Anschluß 57 über die Leitungen 62 und 26 zum Raum 25 des Hydraulikzylinders 13. Schon nach etwa halber Bewegungsstrecke des Stellkolbens wird eine Verbindung von der Ringnut 56 zur Ringnut 60 und von dort über die Leitung 61 zur Leitung 62 geschaffen. Mit dem Antriebskolben 14 wird, nachdem der Druckregler 33 den benötigten Arbeitsdruck eingestellt hat, auch der Füllkolben 7 angehoben und verdrängt Füllmasse aus dem Raum 18 durch das jetzt geöffnete Absperrorgan 1 hindurch.

Die verdrängte Menge wird durch die verhältnisgleiche Menge des durch die Leitung 26 fließenden Öls vom Durchlaufmengenmesser 28 erfaßt und durch den Impulsgeber 29 und den Impulstaster 30 an die Elektronik weitergemeldet. Sobald die vom Mengenwähler 75 voreingestellte Menge festgestellt ist, ergeht ein Kommando zum Stillsetzen des Füllkolbens 7 und zum Schließen des Absperrorgans 1. Beim Steuerventil 9 genügt hierzu ein Abschalten des Magneten 43, wodurch das Ventil mittels seiner Rückstellfedern in die gezeichnete Mittelstellung zurückgebracht wird und dadurch beide Räume 23, 25 des Hydraulikzylinders 13 absperrt.

Vor Erreichen der vorgewählten Portionsmenge kann der Magnet 45 des Steuerventils 6 schon abgeschaltet und durch Federrückstellung des Ventils in seine Haltestellung das Absperrorgan in seiner Öffnungsstellung festgehalten sein. Jedenfalls wird durch das Stopkommando der Magnet 46 eingeschaltet, der das Steuerventil 6 nach links in die Umkehrstellung bringt, wodurch der Stellkolben 49 nach links verschoben wird und den Ölzufluß über die Ringnut 63 durch die Leitung 103 zum Steuerventil 12 freigibt. Mit dem Schließkommando ist auch der Magnet 64 schon eingeschaltet worden und hat das Steuerventil 12 nach links in die Durchleitstellung gebracht. Durch geeignete Ausbildung des rechten Endes des Stellkolbens kann erreicht werden, daß der Abdrehmotor 65 schon anläuft, bevor das Absperrorgan 1 vollständig geschlossen ist. Er wird stillgesetzt, sobald die voreingestellten Umdrehungen vollendet sind, und gibt dann erneut ein Steuerkommando, das den Magneten 64 abschaltet und die Magnete 43 und 45 wiederum einschaltet, um den vorgeschilderten Zyklus zu wiederholen.

Dieses Steuerkommando kann ohne weiteres auch so eingerichtet werden, daß der neue Portioniervorgang schon beginnt, bevor das Abdrehen vollständig beendet ist. Grundsätzlich werden jedoch Abdrehen und Portionieren zeitlich aufeinanderfolgend ausgeführt, so daß die Menge der von der Pumpe 40 geförderten und vom Druckregler 33 geregelten Druckflüssigkeit keine allzu großen Schwankungen erfährt.

Nach Fig. 2 steuert der Impulstaster 30 zwei Digitalzähler 83, 84. Der Digitalzähler 83 ist ebenso wie der Mengenwähler 75 an eine Vergleichsanordnung 85 angeschlossen, die über die Leitung 86 mit Schalter 112 den Magneten 46 des Steuerventils 6 einschaltet und über Schalter 111 den Magneten 43 des Steuerventils 9 abschaltet, sobald der Digitalzähler 83 die im Mengenwähler 75 eingestellte Größe erreicht hat. Dadurch wird über den Umkehrteil c des Steuerventils 6 der Schließvorgang des Absperrorgans 1 gesteuert und mittels des Halteteils a des Steuerventils 9 die Zufuhr von Druckflüssigkeit zum Raum 25 des Hydraulikzylinders 13 gesperrt, der Füllkolben 7 also stillgesetzt. Über die Leitung 87 wird dabei die Vergleichsanordnung 85 und von dieser über die Leitung 88 der Digitalzähler 83 auf Null gestellt, d. h. der Zählvorgang für die nächste Portion beginnt schon, bevor die gerade eingefüllte Portion beendet ist.

Wenn beispielsweise der Mengenzähler 75 auf die Menge 100 eingestellt ist, so wird zunächst unter zusätzlicher Steuerung des Absperrorgans 1 durch den Füllkolben 7 so lange dosiert, bis im Durchlaufmesser 28 100 ml durchgelaufen sind und der Magnet 46 geschaltet wird. Beträgt der Nachlauf 10 ml, so wird diese Menge zwar für die zweite Portion gezählt, aber noch zur ersten Portion ausgegeben, die damit 110 ml erreicht.

Wenn nun der Digitalzähler 83 wieder den Wert 100 ml erreicht hat und die Vergleichsanordnung 85 erneut umschaltet, hat die zweite Portion erst 90 ml und wird durch den zuvor gemessenen Nachlauf von 10 ml auf 100 ml ergänzt. Auch Änderungen während des Betriebes werden so unverzüglich bei der nächstfolgenden Portion ausgeglichen.

Die dem Digitalzähler 83 übermittelten Zählimpulse werden in gleicher Weise auch in den Digitalzähler 84 eingegeben, der durch den Endlagentaster 20 bei oberer Kolbenendlage auf Null bzw. unterer Endlage auf Nenninhalt des Füllzylinders gesetzt wird. Der Digitalzähler 84 addiert daher, solange der Endlagentaster nicht anspricht, alle ausgegebenen Mengeneinheiten. Diese Gesamtausgabemenge kann im Prinzip unverändert angezeigt werden. Hier ist jedoch ein Umsetzer 89 zwischengeschaltet, der die Anzeigegröße so umwandelt, daß die Füllstandsanzeige 74 die Volumendifferenz zwischen dem größten Wert des Füllraumes 18 und dem aus der unteren Endstellung durch Anheben des Füllkolbens 7 schon verdrängten Volumen anzeigt. Damit ist recht exakt die im Füllzylinder 3 verbliebene Menge erfaßt.

Nach Fig. 3 sendet jeder Zahn des auf der Welle 52 für das Absperrorgan 1 sitzenden Sternrades 80 beim Durchlauf am Taster 81 einen Impuls aus, der einen bestimmten Öffnungswinkel, beispielsweise 9" entspricht. Beim Aufschwenken um 90" zwischen Schließ- und Öffnungs-Endstellung werden daher zehn Impulse dem Digitalzähler 90 übermittelt.

Dieser ist ebenso wie der Öffnungswähler 79, der normalerweise auf seinen größten Wert 10 eingestellt ist, an die Vergleichsanordnung 91 angeschlossen, die bei Übereinstimmung der Informationen aus 90 und 79 durch einen Schalter 92 den Magneten 45 des Steuerventils 6 abschaltet, der daraufhin durch seine Federn wieder in die mittlere Haltestellung a gebracht wird und das Absperrorgan 1 in der erreichten Endstellung beläßt. Über die Leitung 93 werden gleichzeitig der Digitalzähler 90 und die Vergleichsanordnung 91 zurückgestellt.

Nun ist ohne weiteres ersichtlich, daß dieser Abschaltvorgang auch dann eintritt, wenn der Öffnungswähler 79 auf einen Wert kleiner als 10 eingestellt ist, etwa 8, 7 oder 5. In diesem Fall wird also das Absperrorgan 1 schon in einer Stellung stillgesetzt, in der es nur teilweise geöffnet ist. Dies ist einmal wichtig für die Fertigung kleiner Portionen, wobei oftmals die verfügbare Taktzeit kleiner ist als die zum vollständigen Öffnen und Schließen des Absperrorgans.

Der Mengenwähler 75 läßt sich direkt an die Vergleichsanordnung 91 anschalten, wobei jeder eingestellten Menge ein bestimmter Öffnungswinkel bzw. eine bestimmte Impulszahl zugeordnet ist. Stillgesetzt wird dann, sobald der kleinste Wert auf den beiden Wählern 79, 75 erreicht ist.

Ein anderer Grund zur Begrenzung des Öffnungswinkels kann darin liegen, daß der Druck bei weichen bzw. elastisch nachgiebigen Füllmassen beim Dosiervorgang im Bereich des Absperrorgans abfällt. Dies läßt sich dadurch selbsttätig berücksichtigen, daß man z. B. den auf Druckänderungen ansprechenden Taster 70 an die Vergleichsanordnung 91 anschließt.

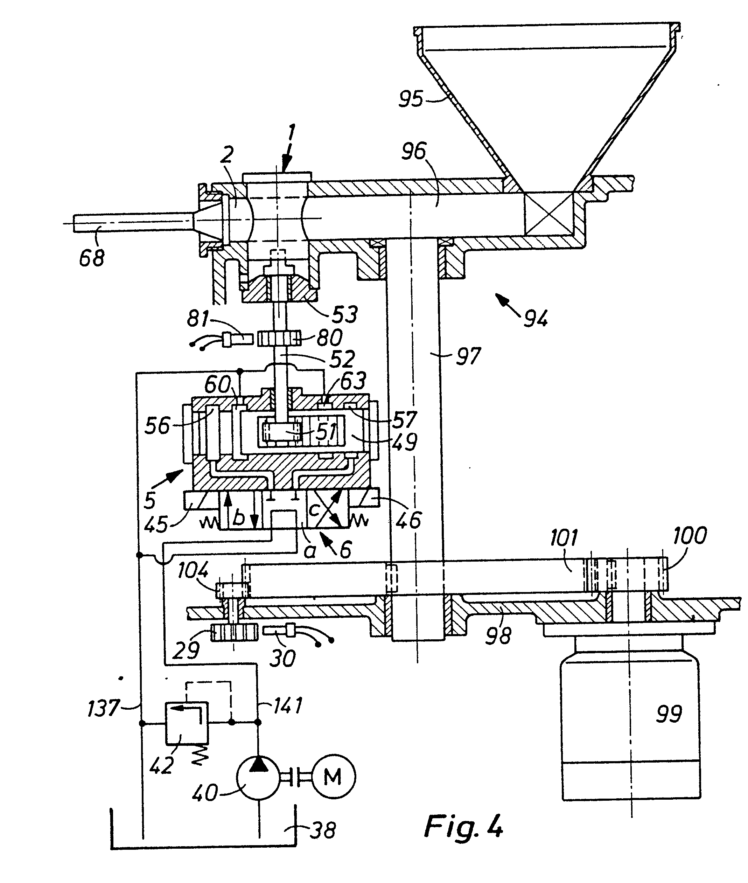

Bei der in Fig. 4 gezeigten Anordnung sitzt das Füllrohr 68 fest am Ende der Auslaßleitung 2. Absperrorgan 1, Stellmotor 5 und Steuerventil 6 sind im wesentlichen unverändert, nur ist jetzt die Öffnungsstellung des Absperrorgans dargestellt. Die inneren Ringnuten 60, 63 sind über die Rücklaufleitung 137 verbunden, und die Druckleitung 141 ist über den Halteteil a des Steuerventils 6 geführt.

Als Fülldruckquelle dient jetzt unmittelbar eine Flügelzellenpumpe 94, die einen Fülltrichter 95 trägt und deren Förderrad 96 auf einer lotrechten Welle 97 sitzt, die mit ihrem unteren Ende in einer etwa wagerecht verlaufenden Wand 98 eines Pumpengehäuses gelagert ist. An der gleichen Wand ist ein Motor 99 angeflanscht, der mit seinem Ritzel 100 ein auf der Welle 97 aufgekeiltes Zahnrad 101 treibt.

Dieses Zahnrad 101 kämmt wiederum mit einem Ritzel 104, auf dem der Impulsgeber 29 sitzt. Jeder Zahn des Sternrades entspricht hier einer kleinen Winkeleinheit der Umdrehungen des Zahnrades 101 und damit des Förderrades 96. Da die Fördermenge proportional zum Drehwinkel ist, entspricht wieder jeder vom Impulstaster 30 aufgenommene Impuls einer bestimmten Einheitsmenge der aus dem Trichter 95 in die Auslaßleitung geförderten Füllmasse. Der Motor 99 kann daher in der gleichen Weise wegabhängig geschaltet werden, wie dies an Hand Fig. 2 für den Füllzylinder 3 nach Fig. 1 geschildert ist.

Der Motor 99 kann ein Elektromotor, Hydromotor und auch ein Druckluftmotor sein. Er läßt sich mit konstantem oder positiv gesteuertem Drehmoment betreiben. Anstatt diesen Motor unmittelbar zu steuern, kann eine steuerbare Kupplung zwischengeschaltet werden.

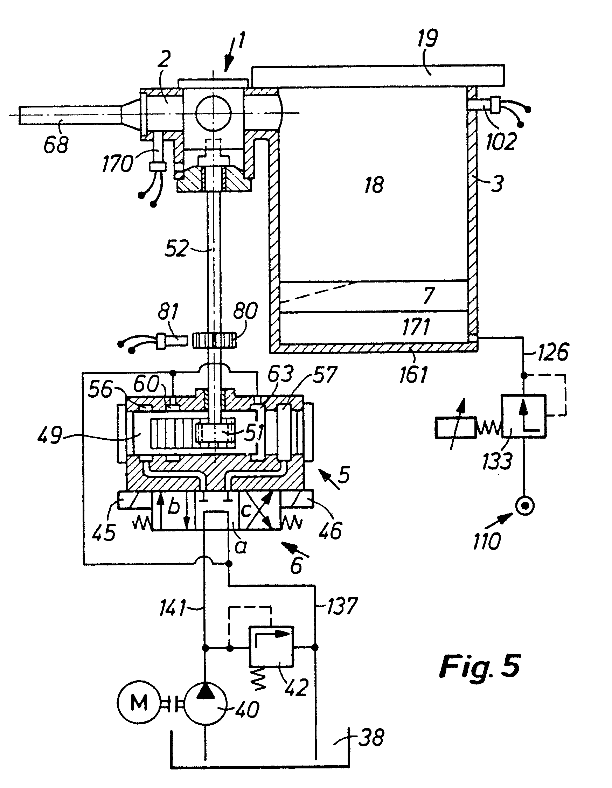

Bei den bisher geschilderten Ausführungen wird durch ein schaltschrittmäßig bewegbares Förderelement wie den Füllkolben 7 oder das Förderrad 96 vordosiert und durch das Absperrorgan 1 nachdosiert. Fig. 5 zeigt nun eine Ausführung, bei der lediglich das Absperrorgan 1 in der gleichen Weise wie bei den zuvor geschilderten Ausführungen gesteuert, einlaßseitig jedoch nur auf konstanten Füllmassedruck geachtet wird.

Die Füllmasse wird wiederum im Raum 18 des Füllzylinders 3 über einem Füllkolben 7 eingebracht. Der Zylinderboden 161 ist abgeschlossen, und der Raum 171 unter dem Füllkolben 7 steht über die Leitung 126 und das in diese eingeschaltete Druckregelventil 133 unmittelbar mit der hydraulischen Druckquelle 110 in Verbindung. Zur Steuerung des Druckes kann ein Drucktaster 102 im Füllzylinder 3 dienen, und zur Messung der ausgegebenen Menge dient ein Durchlauf-Mengenmesser 170, der dicht hinter dem Absperrorgan 1 in der Auslaßleitung 2 angebracht ist. Dieser Durchlauf-Mengenmesser ertastet die durchlaufende Menge berührungsfrei ohne mechanischen Eingriff und liefert mit oder ohne Umwandler eine mengengleiche Impulszahl, was wiederum die Steuerung nach Fig. 2 ermöglicht. Der Durchlauf-Mengenmesser 170 kann zudem zur Steuerung des Digitalzählers 84 aus Fig. 2 und damit zur Angabe der noch verfügbaren Füllmasse oder der bereits ausgepreßten Füllmasse herangezogen werden.

Durchlauf-Mengenmesser der vorgeschilderten Bauart beispielsweise auf der Basis von Ultraschallwellen, wobei die Zeitdifferenz zwischen Aussendung und Empfang der Wellen oder aber die Frequenzänderung eines Strahles nach Durchtritt durch das Medium zur Geschwindigkeits- und dadurch Mengenmessung benutzt werden, sind bekannt durch den Aufsatz »Verfahren zur Mengen- und Durchflußmessung strömender Güter« aus den Seiten 65 bis 68 aus Heft 9, 1978, der Firmenzeitschrift von Bopp & Reuther GmbH, Mannheim, auf die hiermit Bezug genommen wird.

Wie bei den bisher geschilderten Ausführungen ist auch hier wieder die Begrenzung der Öffnungsweite durch Steuerung mittels Sternrad 80 und Taster 81 gesteuert. Dabei muß es sich jedoch nicht ausschließlich um eine Begrenzungssteuerung handeln, es kann auch eine Kopiersteuerung dergestalt vorgesehen werden, daß zunächst auf größere Öffnungsweite gestellt und diese Öffnungsweite anschließend reduziert wird, wozu ggf. richtungsorientierte Taster anstelle reiner Impulstaster eingesetzt werden können.

Die erfindungsgemäß vorgesehene Anordnung ermöglicht einen sehr einfachen technischen Aufbau für eine Maschine, mit der sowohl gefüllt als auch portioniert und abgedreht werden kann, wobei auch Portionen sehr unterschiedlicher Größe in schneller Folge mit wenigstens hinreichender Gewichts- oder Volumengenauigkeit ausgegeben werden können. Die Regelung von der kleinsten Portionsgröße von beispielsweise 5 Gramm bis auf mehrere Kilogramm oder auch für eine durchlaufende Ausgabe wird durch ein einziges Verstellkommando bewerkstelligt. Sorgfalt und Präzision erfordern im Prinzip nur die Herstellung des Abtrennorgans und dessen Servoantrieb. Durch die Präzision und Schaltleistung dieser Teile ist dann auch die erreichbare Taktzahl bestimmt. Mit den heute verfügbaren Aggregaten lassen sich Taktzahlen bis zu 600/Min. erreichen. Die Antriebsenergie für die Funktion »Abdrehen« wird dem Strömungsmittelkreislauf in einem Moment entnommen, in dem für die Funktionen »Füllen« bzw. »Portionieren« keine Energie benötigt wird. Dadurch ergeben sich eine verhältnismäßig geringe installierte Leistung und ein günstiger Gesamtwirkungsgrad.

Neben dem in den Ausführungsbeispielen erläuterten Portionieren von Wurstmasse läßt sich die Anordnung auch zum Portionieren anderer Lebensmittel, beispielsweise Schinken, verwenden, wobei dann das Abtrennorgan als Schneideinrichtung ausgebildet ist, das beim Schneiden die Auslaßleitung der Fördereinrichtung schließt.

## Patentansprüche

1. Anordnung zum aufeinanderfolgenden Portionieren einer abteilbaren Masse, insbesondere Wurstmasse, mit einer im Rhythmus des Dosiervorganges zu betätigenden Fördereinrichtung (3, 18, 7, 17) für die Masse, der ein motorisch betätigtes Abtrennorgan (1) nachgeschaltet ist, dessen Steuerorgan (6) in Abhängigkeit von einem Füllmengen-Sollwert auch die Fördereinrichtung (3, 18, 7, 17) betätigt und hydraulisch mit einem in einem Zylinder zwischen zwei Endanschlägen verschiebbaren Stellkolben (49) zur Betätigung des Abtrennorgans (1) verbunden ist, dadurch gekennzeichnet, daß der Stellkolben (49) bei der Öffnungsbewegung für das Abtrennorgan (1) das Strömungsmittel über eine Ausgangsöffnung (57) des Zylindergehäuses (47) in eine zur Fördereinrichtung (7) führende Leitung (62, 26) verdrängt und am Ende der Schließbewegung den Weg (41, 47, 63, 103) des vollen Strömungsmittelstroms durch die Bahn des Stellkolbens (49) hindurch zur Betätigung einer nachgeschalteten Abdrehvorrichtung (4) freigibt.

2. Anordnung nach Anspruch 1, dadurch gekennzeichnet, daß eine Ausgangsleitung (60, 61) des Zylindergehäuses (47) in die zur Fördereinrichtung (7) führende Leitung (62) mündet und bei Beginn der Öffnungsbewegung des Stellkolbens (49) von diesem zum vom Strömungsmittelstrom beaufschlagten Zylinderinnenraum hin geschlossen ist.

3. Anordnung nach Anspruch 1 oder 2, dadurch gekennzeichnet, daß zur Steuerung der Öffnungs- und Schließbewegungen des Stellkolbens (49) eine Mengenmeßvorrichtung (28, 70) vorgesehen ist.

4. Anordnung nach Anspruch 3, dadurch gekennzeichnet, daß die Mengenmeßvorrichtung (28) in die Leitung (26) zwischen der Fördereinrichtung (7) und dem Steuerorgan (9) für den Steuerkolben (49) geschaltet ist.

5. Anordnung nach Anspruch 3, dadurch gekennzeichnet, daß die Mengenmeßvorrichtung (70) in die Ausgangsleitung (2) der Fördereinrichtung (7) geschaltet ist.

6. Anordnung nach Anspruch 4 oder 5, dadurch gekennzeichnet, daß die Mengenmeßvorrichtung (28) mit einem digitalen Impulsgeber (29, 30) versehen ist, dem ein Digitalzähler (83) nachgeschaltet ist.

7. Anordnung nach einem der vorhergehenden Ansprüche, dadurch gekennzeichnet, daß das Absperrorgan (1) ein Drehschieber ist, der der als Dosierkolben ausgebildeten Fördereinrichtung (7) nachgeschaltet ist.

7. Anordnung nach einem der vorhergehenden Ansprüche, dadurch gekennzeichnet, daß das Absperrorgan (1) ein Drehschieber ist, der der als Dosierkolben ausgebildeten Fördereinrichtung (7) nachgeschaltet ist.

8. Anordnung nach einem der Ansprüche 1 bis 7, dadurch gekennzeichnet, daß die Steuerorgane (6, 9) mit einem Sollwertgeber (75) für die Portionsgröße und einer Vergleichsanordnung (85) zum ständigen Vergleichen von Soll- und Istwert verbunden sind und den Schließvorgang des Abtrennorgans (1) nach dem Vergleichswert steuern.

9. Anordnung nach Anspruch 8, gekennzeichnet durch Umschaltmittel (87, 88) zum unverzüglichen Umschalten der Mengenmeßvorrichtung (28, 29, 30, 83) auf die Messung der nächsten Portion, sobald der Istwert den Sollwert einer Portion erreicht hat.

10. Anordnung nach einem der vorhergehenden Ansprüche, gekennzeichnet durch Steuermittel (80, 81) zum Begrenzen der Öffnungsweite des Abtrennorgans (1).

11. Anordnung nach Anspruch 10, dadurch gekennzeichnet, daß ein Öffnungstaster (80) zum Ertasten der augenblicklichen Öffnungsweite des Abtrennorgans (1) und zur Steuerung der Öffnungsweite vorgesehen ist.

12. Anordnung nach Anspruch 11, dadurch gekennzeichnet, daß dem Öffnungstaster (80) ein Impulsgeber (81) zugeordnet ist, der einen Digitalzähler (90) steuert, der bei Erreichen eines vorgegebenen Sollwertes durch den Istwert den Öffnungsvorgang des Abtrennorgans (1) beendet.

13. Anordnung nach Anspruch 10, 11 oder 12, dadurch gekennzeichnet, daß durch einen Mengenwähler (75) für die Portionsgröße und/oder einen Druckmesser (70) für den Druck der Masse beeinflußte Steuermittel für die Öffnungsweite des Abtrennorgans (1) vorgesehen sind.

14. Anordnung nach einem der vorhergehenden Ansprüche, gekennzeichnet durch eine Druckregelvorrichtung (33) zum Regeln des Fülldruckes der Fördereinrichtung (7, 96) während der Portioniervorgänge.

15. Anordnung nach einem der vorhergehenden Ansprüche, dadurch gekennzeichnet, daß eine Füllstandsanzeige (74) für die augenblickliche Füllung eines den Füllkolben (7) aufnehmenden Füllzylinders (3) durch den Mengenmesser (28 bis 30) der Portioniersteuerung steuerbar ist.

16. Anordnung nach Anspruch 15, dadurch gekennzeichnet, daß der digitale Impulsgeber (29, 30) des Mengenmessers (28) an einen digitalen Prozessor (89) angeschlossen ist, der die Füllstandsanzeige (74) steuert.

**Claims**

1. Apparatus for dividing a mass capable of being portioned, particularly sausage meat, into sucessive portions, comprising a feed device for said mass to be actuated in the rhythm of the metering operation, a motor-actuated cut-off device disposed downstream of said feed device, a control element of said cut-off device also actuating said feed device in function of a filling amount index value and being hydraulically connected to a control piston slidably arranged in a cylinder between two end stops for actuating said cut-off defice, characterized in that during the opening movement for said cut-off device (1) said control piston (49) displaces the fluid through an outlet opening (57) of the cylinder housing (47) and into a conduit (62, 26) leading to said feed device (7), and at the end of the closing movement opens the way (41, 47, 63, 103) for the full flow of the fluid through the path of said control piston (49) for the actuation of a downstream twist-off defice (4).

2. Apparatus according to claim 1, characterized in that an outlet conduit (60, 61) of said cylinder housing (47) opens into said conduit (62) leading to said feed device (7), and is closed by said control piston (49) towards the cylinder space supplied with the fluid flow at the beginning of the opening movement of said control piston (49).

3. Apparatus according to claim 1 or 2, characterized in that a metering device (28, 70) is provided for controlling the opening and closing movements of said control piston (49).

4. Apparatus according to claim 3, characterized in that said metering device (28) is inserted into the conduit (26) between said feed device (7) and the control element (9) for said control piston (49).

5. Apparatus according to claim 3, characterized in that said metering device (70) is inserted into the outlet conduit (2) of said feed device (7).

6. Apparatus according to claim 4 or 5, characterized in that said metering device (28) is provided with a digital pulse generator (29, 30) connected to a downstream digital counter (83).

7. Apparatus according to any of the preceding claims, characterized in that said cut-off device (1) is a rotary valve located downstream of said feed device (7) itself formed as a metering piston.

8. Apparatus according to any of claims 1 to 7, characterized in that said control elements (6, 9) are connected to an index value generator (75) determining the portion size and a comparator arrangement (85) for continuously comparing the index value and the actual value, so as to control the closing operation of said cut-off device (1) in accordance with the comparison value.

9. Apparatus according to claim 8, characterized by reset means (87, 88) for immediately resetting said metering device (28, 29, 30, 83) to meter the succeeding portion as soon as the actual value of a portion has reached the index value thereof.

10. Apparatus according to any of the preceding claims, characterized by control means (80, 81) for limiting the opening width of said cut-off device (1).

11. Apparatus according to claim 10, characterized in that an opening sensor (80) is provided for sensing the momentary opening width of said cut-off device (1) and for controlling said opening width.

12. Apparatus according to claim 11, characterized in that said opening sensor (80) is associated with a pulse generator (81) controlling a digital counter (90) effective to terminate the opening operation of said cut-off device (1) upon the actual value reaching a predetermined index value.

13. Apparatus according to claim 10, 11 or 12, characterized in that control means are provided for the opening width of said cut-off device (1), said control means being influenced by a portion size selector (75) and/or by a pressure gauge (70) sensing the pressure of said mass.

14. Apparatus according to any of the preceding claims, characterized by a pressure control device (33) for controlling the filling pressure of said feed device (7, 96) during the metering operations.

15. Apparatus according to any of the preceding claims, characterized in that a filling level display (74) indicating the momentary filling level of a filling cylinder (3) receiving said filling piston (7) is adapted to be controlled by said metering device (28 to 30) of the portion metering control means.

16. Apparatus according to claim 15, characterized in that said digital pulse generator (29, 30) of said metering device (28) is connected to a digital processor (89) controlling said filling level display (74).

## Revendications

1. Montage permettant un dosage successif d'une masse partageable, chair à saucisse notamment, avec un dispositif de refoulement (3, 18, 7, 17) de la masse, actionné au rythme du processus de dosage et en aval duquel est monté un organe de séparation (1) commandé par moteur, l'élément de commande (6) de l'organe précité actionnant également le dispositif de refoulement (3, 18, 7, 17), en fonction d'une valeur de consigne des quantités de remplissage, et présentant des raccordements hydrauliques avec un servo-piston (49), mobile entre deux butées fin de course dans un vérin, afin de manoeuvrer l'organe de séparation (1), caractérisé en ce que le servo-piston (49) refoule le fluide hydraulique, par l'intermédiaire d'un orifice de sortie (57) prévu dans le carter de vérin (47), dans une conduite (62, 26) reliée au dispositif de refoulement (7), lors de son mouvement d'ouverture pour l'organe de séparation (1), et libère, à la fin de son mouvement de fermeture, le parcours (41, 47, 63, 103) du courant global de fluide qui le traverse, afin d'actionner un dispositif de torsadage (4) monté en aval.

2. Montage suivant la revendication 1, caractérisé en ce qu'une conduite de sortie (60, 61) du carter de vérin (47) débouche dans la conduite (62) reliée au dispositif de refoulement (7), cette conduite (60, 61) étant fermée par le servo-piston (49), au début du mouvement d'ouverture de ce dernier, dans le sens du compartiment interne du vérin sollicité par le fluide hydraulique.

3. Montage selon une des revendications 1 et 2, caractérisé en ce qu'un dispositif de mesure de débit (28, 70) est prévu pour la commande des mouvements d'ouverture et de fermeture du servo-piston (49).

4. Montage selon la revendication 3, caractérisé en ce que le dispositif de mesure de débit (28) est monté sur la conduite (26) reliant le dispositif de refoulement (7) à l'organe de commande (9) du servo-piston (49).

5. Montage selon la revendication 3, caractérisé en ce que le dispositif de mesure de débit (70) est monté sur la conduite de sortie (2) du dispositif de refoulement (7).

6. Montage selon une des revendications 4 et 5, caractérisé en ce que le dispositif de mesure de débit (28) est muni d'un générateur d'impulsions (29, 30) numérique, à la suite duquel est monté un compteur numérique (83).

7. Montage selon une quelconque des revendications précédentes, caractérisé en ce que l'organe d'arrêt (1) est un robinet distributeur tournant, monté en aval du dispositif de refoulement (7) représenté par un piston doseur.

8. Montage selon une quelconque des revendications 1 à 7, caractérisé en ce que les organes de commande (6, 9) sont reliés à un sélecteur (75) de consigne pour la valeur de la dose et à un montage comparateur (85), qui établit une comparaison permanente entre la valeur de consigne et la valeur réelle, les organes (6, 9) précités commandant le processus de fermeture de l'organe de séparation (1) d'après la valeur comparative.

9. Montage selon la revendication 8, caractérisé par des moyens (87, 88) de commutation immédiate du dispositif de mesure de débit (28, 29, 30, 83) sur la mesure de la dose suivante, dès que la valeur réelle a atteint la valeur de consigne d'une dose.

10. Montage selon une quelconque des revendications précédentes, caractérisé par des éléments de commande (80, 81) permettant de limiter la largeur d'ouverture de l'organe de séparation (1).

11. Montage selon la revendication 10, caractérisé par un capteur (80) permettant de relever la largeur d'ouverture instantanée de l'organe de séparation (1) et de commander cette largeur d'ouverture.

12. Montage selon la revendication 11, caractérisé en ce que le capteur 80 est affecté à un générateur d'impulsions (81) commandant un compteur numérique (90), qui arrête le processus d'ouverture de l'organe de séparation (1), dès que la valeur réelle atteint une valeur de consigne prédéfinie.

13. Montage selon une des revendications 10, 11 et 12, caractérisé en ce que des éléments de commande sont prévus pour la largeur d'ouverture de l'organe de séparation (1), ces éléments étant influencés par un sélecteur de débit (75) pour la valeur de la dose et/ou par un capteur de pression (70) pour la pression de la masse.

14. Montage selon une quelconque des revendications précédentes, caractérisé par un contrôleur de pression (33), qui permet de régler la pression de remplissage du dispositif de refoulement (7, 96) pendant les processus de dosage.

15. Montage selon une quelconque des revendications précédentes, caractérisé en ce que le mesureur de débit (28 à 30) de la commande de dosage peut commander un indicateur de niveau (74), qui affiche le remplissage momentané d'un cylindre (3) contenant le piston (7).

16. Montage selon la revendication 15, caractérisé en ce que le générateur d'impulsions numérique (29, 30) de l'indicateur de débit (28) est raccordé à un processeur numérique (89), qui commande l'indicateur de niveau (74).

*Fig. 1*

0 051 626

Fig. 2

Fig. 3

**Fig. 4**

15

*Fig. 5*